# EUROPÄISCHE PATENTSCHRIFT

(11) **EP 1 356 917 B1**
(45) Veröffentlichungstag und Bekanntmachung des Hinweises auf die Patenterteilung: **01.04.2009**
(21) Anmeldenummer: 03009386.8
(22) Anmeldetag: 25.04.2003
(51) Int. Cl.: B29C 65/08, B65B 51/22, B65B 51/26, B29C 65/74

(54) **Vorrichtung zum Ausbilden und/oder Verschliessen einer Verpackungseinheit**
Apparatus for shaping and/or sealing a package unit
Appareil pour la fabrication et/ou la fermeture d'un emballage

(30) Priorität: 25.04.2002 DE 20206561 U
(43) Veröffentlichungstag der Anmeldung: 29.10.2003
(73) Patentinhaber: GREIF-VELOX Maschinenfabrik GmbH, 23560 Lübeck (DE)
(72) Erfinder: Dietrich, Norbert, 35773 Hennef (DE); Dreier, Hans Bernd, 33378 Rheda-Wiedenbrück (DE)
(74) Vertreter: Grünecker, Kinkeldey, Stockmair & Schwanhäusser Anwaltssozietät

(56) Entgegenhaltungen:
- EP-A- 1 066 951
- EP-A- 1 232 850
- US-A- 4 526 565
- US-A1- 2002 011 048
- PATENT ABSTRACTS OF JAPAN Bd. 1999, Nr. 14, 22. Dezember 1999 (1999-12-22) -& JP 11 245305 A (LIHIT LAB INC), 14. September 1999 (1999-09-14)

## Beschreibung

Die vorliegende Erfindung betrifft eine Vorrichtung zum Ausbilden einer aus einem Seitenfaltenschlauch gebildeten Verpackungseinheit oder zum Verschließen einer einen Seitenfaltenschlauch aufweisenden vorkonfektionierten Verpackungseinheit, insbesondere eines Schüttgutsackes, mit einer Schweißeinrichtung.

Mit einer vorbekannten Vorrichtung wird z.B. ein mit einem Schüttgut befüllter Ventilsack, der nach dem Befüllen von dem Ventilstutzen abgeschoben wird, im Bereich seines Ventils verschweißt. Diese Ventilsäcke sind vorkonfektionierte Verpackungseinheiten im Sinne der vorliegenden Erfindung. Die Ventilsäcke können beispielsweise im Bereich des Ventilstutzens einen Seitenfaltenschlauch umfassen, der mittig einen zweilagigen und endseitig jeweils einen vierlagigen Bereich aufweist und der mit der Vorrichtung durch Verschweißen verschlossen wird.

Eine gattungsbildende Vorrichtung ist aber auch z.B. bekannt zum Ausbilden einer aus einem Endlosschlauch gebildeten Verpackungseinrichtung, vgl. EP 1 066 951. In dem sogenannten FFS-Verfahren (Form-Füll-Seal) wird ein Seiten- oder Flachfaltenschlauch von einer Rolle abgewickelt. Ein vorbestimmtes Längenstück wird von dem zugeführten Endlosmaterial abgetrennt und an der Trennstelle durch thermisches Verschweißen verschlossen. Der derart hergestellte, oben offene Schüttgutsack wird zunächst in eine Zwischenablage abgelegt. Hier kühlt die Schweißnaht ab, um die für das spätere Befüllen des Schüttgutsackes erforderliche Festigkeit zu erzielen. Von der Zwischenablage wird der vorbereitete Schüttgutsack dann gegriffen und mit der Öffnung nach oben unter einer Fülleinrichtung angeordnet. Nach dem Verfüllen wird das Material des Schüttgutsackes auch an seiner Oberseite verschweißt. Hierzu ist aus dem vorgenannten Stand der Technik eine Ultra-Schweißeinrichtung vorgesehen.

Nachteilig bei dieser vorbekannten Vorrichtung für das FFS-Verfahren ist zum einen das Erfordernis einer Zwischenablage. Zum anderen hat der nach dem FFS-Verfahren hergestellte Schüttgutsack zumindest an seiner Unterseite einen die untere Schweißnaht endseitig überragenden Längenabschnitt des Schlauchmaterials. Ziel des Verfahrens sollte es sein, aus dem endlos zugeführten Schlauchmaterial möglichst viele Schüttgutsäcke herzustellen.

Bei den vorstehend beschriebenen Vorrichtungen zum Verschließen eines Seitenfaltenschlauches muss die Schweißeinrichtung sowohl einen vierlagigen Bereich des Seitenfaltenschlauches als auch einen zweilagigen Bereich des Seitenfaltenschlauches verschließen. Dies ist derzeit nur mit einer thermischen Schweißeinrichtung möglich. Bei einer thermischen Schweißeinrichtung wird das zu verschließende Folienmaterial des Schlauches erwärmt und kann erst wieder nach einer vollständigen Abkühlung belastet werden. Dies kann zu einer Verzögerung der Verfahrensdauer beim Verschließen des Seitenfaltenschlauches führen.

Der vorliegenden Erfindung liegt die Aufgabe zugrunde, eine Vorrichtung der eingangs genannten Art anzugeben, die ein schnelles und zuverlässiges Verschließen eines Seitenfaltenschlauches zur Ausbildung einer Verpackungseinheit oder zum Verschließen einer vorkonfektionierten Verpackungseinheit ermöglicht.

Zur Lösung des obigen Problems der vorliegenden Erfindung wird eine Vorrichtung mit den Merkmalen von Anspruch 1 angegeben.

Die erfindungsgemäße Vorrichtung weist eine Ultraschweißeinrichtung umfassend einen Amboss und eine Sonotrode auf. Mit dieser Schweißeinrichtung kann der Seitenfaltenschlauch im Wesentlichen ohne thermischen Eintrag verschlossen werden. Die Einhaltung einer Abkühlzeit vor der Beanspruchung der Schweißnaht ist nicht erforderlich. Eine unterseitig durch Schweißen verschlossene aus einem Seitenfaltenschlauch gebildete Verpackungseinheit kann sofort gefüllt werden (FFS-Verfahren). Ein Ventilsack, der einen aus einem Seitenfaltenschlauch gebildeten Ventilstutzen aufweist, kann unmittelbar nach dem Verschließen weiter befördert werden, ohne dass zu befürchten ist, dass sich die Schweißnaht öffnet.

Die erfindungsgemäße Vorrichtung weist einen Amboss und/oder eine Sonotrode auf, von denen zumindest eine eine konturierte Wirkfläche aufweist. Es hat sich herausgestellt, dass mit einer derartigen konturierten Wirkfläche haltbarere Schweißnähte erzielt werden können. Vorzugsweise weist die erfindungsgemäße Vorrichtung eine Einrichtung zum Positionieren des zu verschweißenden Schlauchmaterials auf. Diese Positioniereinrichtung kann beispielsweise Führungsrollen umfassen, welche zugeführtes Endlosmaterial eines Seitenfaltenschlauches seitlich führt und auf die Schweißeinrichtung zuleitet. Eine oder mehrere dieser Führungsrollen können zum Vortrieb des Seitenfaltenschlauches angetrieben sein.

Verzugsweise ist bei der erfindungsgemäßen Vorrichtung der mittlere Bereich der konturierten Oberfläche, der im wesentlichen auf den zweilagigen Bereich des Seitenfaltenschlauches einwirkt, ist geringer konturiert als die auf den vierlagigen Bereich des Seitenfaltenschlauches einwirkenden Endbereiche von Amboss und/oder Sonotrode. Als Konturierung im Sinne der vorliegenden Erfindung wird jede sich rechtwinklig zur wirksamen Oberfläche erstreckende Erhebung bzw. Ausnehmung verstanden. Der mittlere Bereich kann glatt sein, also keine Konturierung aufweisen. Jedenfalls die Endbereiche sind konturiert.

Bevorzugte Ausgestaltungen der erfindungsgemäßen Vorrichtung sind in den Unteransprüchen angegeben.

Weitere Einzelheiten, Vorteile und Merkmale der vorliegenden Erfindung ergeben sich aus der nachfolgenden Beschreibung eines Ausführungsbeispiels in Verbindung mit der Zeichnung. In dieser zeigen:
- Figur 1a: ein Ausführungsbeispiel einer Ultraschall-Schweißeinrichtung als Teil einer Vorrichtung zum Ausbilden und/oder Verschließen eines Schüttgutsackes in einer ersten Stellung;
- Figur 1b: die in Figur 1a gezeigte Ultraschall-Schweißeinrichtung in einer zweiten Stellung;
- Figur 2: eine Draufsicht auf den mittleren Bereich des Amboss des in Figur 1 gezeigten Ausführungsbeispiels;
- Figur 3: eine Draufsicht auf ein Ausführungsbeispiel eines erfindungsgemäßen Amboss und
- Figur 4: eine Längsschnittansicht des in Figur 3 gezeigten Ausführungsbeispieles.

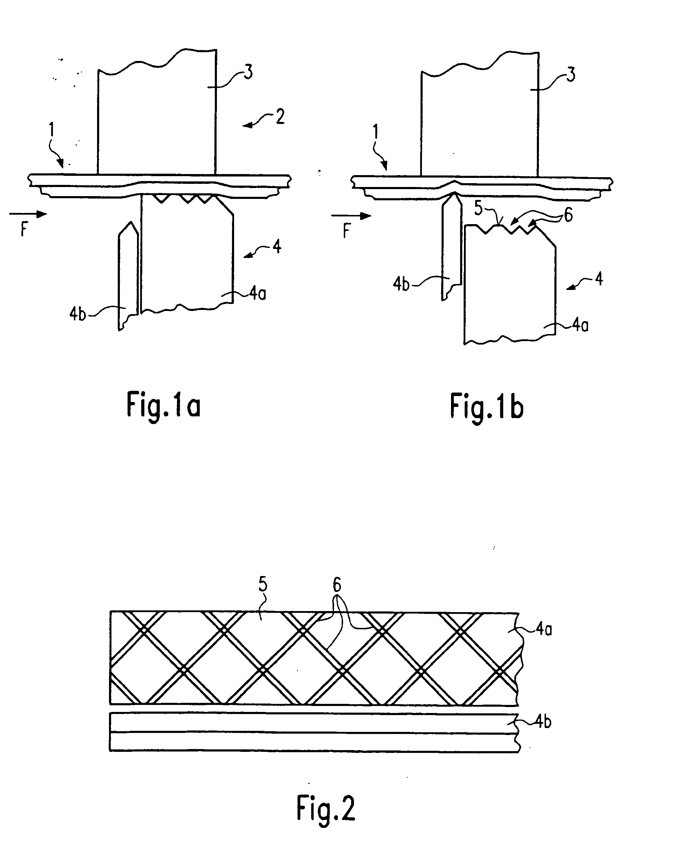

In Figur 1 ist ein Endlosschlauch 1 gezeigt, der von einer nicht dargestellten Spule abgewickelt und einer Ultraschall-Schweißeinrichtung 2 zugeführt wird. In der Ansicht gemäß Figur 1a links neben der Ultraschall-Schweißeinrichtung 2 befindet sich der von der Spule abgewickelte Seitenfaltenschlauch als Endlosmaterial. Rechts von der Ultraschall-Schweißeinrichtung 2 befindet sich eine vorbestimmte Länge des Seitenfaltenschlauches 1. Diese vorbestimmte Länge wird in der Figur 1 gezeigten Ultraschall-Schweißeinrichtung zunächst zu einem nach unten verschlossenen Sack ausgebildet.

Hierzu weist die Ultraschall-Schweißeinrichtung eine Sonotrode 3 und einen Amboss 4 auf. Die Sonotrode hat eine glatte, dem Amboss gegenüberliegend ausgebildete Stirnseite. Diese Stirnseite verläuft parallel zu der Längserstreckung des Seitenfaltenschlauches 1. Auf der anderen Seite des Seitenfaltenschlauches 1 befindet sich ein zweiteiliger Amboss 4 bestehend aus einem Verschließamboss 4a und einem Trennamboss 4b. Die Ambossteile 4a, 4b sind verschieblich gegeneinander gelagert und stützen sich mit ihren benachbarten Seitenflächen aneinander ab. Hierdurch wird die Verschiebebewegung der Teile gegeneinander geführt. Aufgrund dieser Ausgestaltung befindet sich der Trennamboss 4b unmittelbar benachbart zu dem Verschließamboss 4a.

Der Verschließamboss 4a hat eine sich parallel zu der Stirnseite der Sonotrode 3 erstreckende Druckfläche 5. Diese ist - wie der Figur 2 deutlich zu entnehmen ist - von sich diagonal kreuzenden Nuten 6 durchsetzt. Der Amboss 4 einerseits und die Stirnseite der Sonotrode andererseits bilden die gegeneinander wirkenden Wirkflächen der Ultraschall-Schweißeinrichtung aus.

Der Trennamboss 4b ist in Richtung auf die Sonotrode 3 nach Art einer Klinge spitz zulaufend ausgebildet.

Mit dem in den Figuren 1 und 2 gezeigten Ausführungsbeispiel wird aus einem Endlosschlauch 1 ein zunächst unten verschlossener Stückgutsack gebildet. Wie bereits vorstehend erwähnt, wird eine vorbestimmte Länge des Endlosschlauches 1 an der Ultraschall-Schweißeinrichtung 2 in Richtung des Pfeils F vorbei gefördert. Danach wird der Endlosschlauch 1 durch Klemmen zwischen der Sonotrode 3 und dem Amboss 4 in der Ultraschall-Schweißeinrichtung fixiert. Dabei wird der Endlosschlauch 1 zwischen der Druckfläche 5 und der Stirnseite der Sonotrode 3 geklemmt. Ein in der Sonotrode 3 erzeugter Ultraschall-Impuls führt zu einem Verschließen des Endlosschlauches 1 in an sich bekannter Weise. Unmittelbar im Anschluss hierzu wird der Trennamboss 4b relativ zu dem Verschließamboss 4a auf die Sonotrode 3 hin verschoben. Dabei kann der Trennamboss 4b die Sonotrode 3 zusammen mit dem verschlossenen Endlosschlauch 1 nach oben und von dem Verschließamboss 4a weg fördern. Jede andere Relativbewegung zwischen den beiden Ambossteilen, die dazu führt, dass nicht mehr der Verschließamboss 4a, sondern der Trennamboss 4b den Endlosschlauch 1 gegen die Sonotrode 3 klemmt, ist jedoch denkbar.

In der in Figur 1b gezeigten Stellung wird erneut ein weiterer Ultraschall-Impuls in der Sonotrode 3 erzeugt. Dieser Impuls ist vorzugsweise ein anderer als der beim Verschließen erzeugte Impuls. Insbesondere im Hinblick auf eine hohe Standzeit des der Sonotrode 3 zugeordneten Generators ist es zu bevorzugen, bei diesem Verfahrensschritt eine geringere Frequenz und Frequenzdauer in der Sonotrode 3 zur Wirkung zu bringen. Durch diesen zweiten Ultraschall-Impuls wird das Schlauchmaterial 1 geschnitten, und zwar unmittelbar am Rand einer mittels Ultraschweißen hergestellten Schweißnaht 7. Damit ist das vorbestimmte, unten verschlossene und zu einem Schüttgutsack gebildete Längenstück des Endlosschlauches 1 von dem zugeführten Endlosschlauch 1 mittels Ultraschweißen abgetrennt.

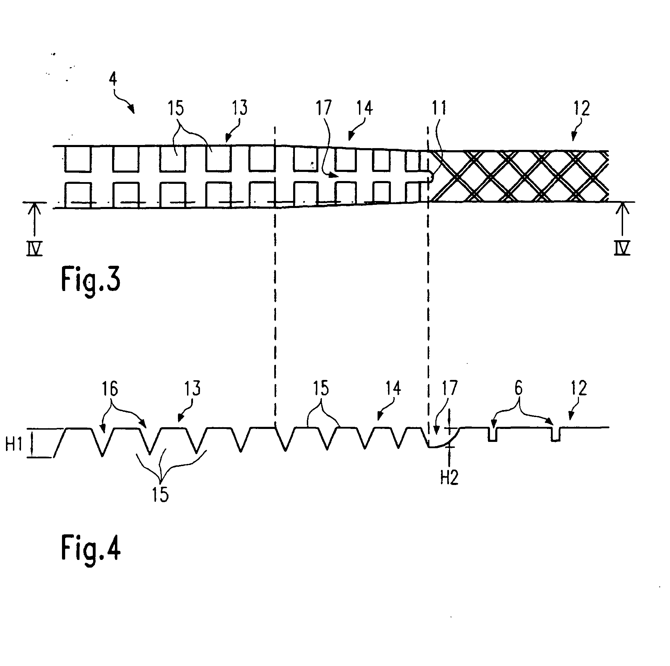

In Figur 3 ist eine Draufsicht, in Figur 4 eine Schnittansicht entlang der Linie IV-IV gemäß Figur 3 durch ein Ausführungsbeispiel eines Ambos 4 gezeigt. Dieser Ambos 4 hat einen mittleren Bereich 12 und einen endseitigen Bereiche 13. Zwischen den beiden Bereichen 12, 13 ist ein Zwischenbereich 14 ausgebildet. Die endseitigen Bereiche, die an die seitlichen Ränder einer zu verschweißenden Seitenfaltenschlauchfolie zur Wirkanlage gebracht werden können, weisen zwei Reihen in Längsrichtung parallel verlaufende Reihen von Stempelsegmenten 15 auf. Die Stempelsegmente 15 sind- wie der Schnittansicht in Fig 4 zu entnehmen ist - im Querschnitt trapezförmig ausgestaltet, wobei die Oberseite der Stempelsegmente 15 in der Oberflächenebene des Amboss liegt. Zwischen den Stempelsegmente 15 sind in Längs- und in Querrichtung des Amboss 4 V-förmige Ausnehmungen 16 ausgespart. In Längsrichtung des Amboss 4 bilden diese Ausnehmungen 16 eine Holkehle 17 aus. Die Hohlkehle 17 erstreckt sich bis in den mittleren Bereich.

Während die Konturierung in dem endseitigen Bereich konstant ist, d.h. die Stempelsegmente in Längsrichtung die gleiche Höhe H1 haben, verringert sich die Höhe der Stempelsegmente in Richtung auf den mittleren Bereich kontinuierlich. Die Konturierung H2 erreicht am Ende des mittleren Bereiches die Konturierung des mittleren Bereiches, d.h. die Einschnitttiefe von im mittleren Bereich ausgesparten, diagonal verlaufenden und sich kreuzenden Schweißnuten 6.

Die Stempelsegmente haben im dem Endbereich 13 eine Konturierung H1 (Höhenabstand zwischen dem Fuß der Stempelsegmente und der oberseitigen Wirkfläche). Der entsprechende Abstand H2 am Ende des mittleren Bereiches nur etwa 1/3 bis 1/5 der Höhe H1 beträgt.

Die Oberflächen des Amboss 4, d.h die Oberflächen der Stempelsegmente 15 sowie die Oberfläche zwischen den Schweißnuten 6 können aufgeraut sein, beispielsweise eine aufgeprägte Noppenstruktur aufweisen.

Der Amboss 4 ist im seinem endseitigen Bereich breiter als in seinem mittleren Bereich. Der Übergangsbereich 14 läuft in der Draufsicht konisch zusammen und verbindet die beiden Bereiche 12 und 13 ohne Absatz.

Der Amboss 4 ist auch bei dem Ausführungsbeispiel der Figuren 3 und 4 als leistenförmiges Bauteil ausgebildet und wirkt bei Verschweißen eines Seitenfaltenschlauches mit einer nicht dargestellten Sonotrode zusammen. Zwischen beide Bauteile wird der Seitenfaltenschlauch durch eine Positioniereinrichtung derart angeordnet, dass sich der zweilagige Bereich des Seitenfaltenschlauches über dem mittleren Bereich 12 befindet und die vierlagige Randbereiche über den Endbereichen 13. Der Übergangsbereich 14 kann teilweise auf dem vierlagigen und teilweise auf dem zweilagigen Bereich des Seitenfaltenschlauches liegen. Der Übergangsbereich 14 kompensiert eventuelle Positionierungenauigkeiten bei der Anordnung der Folie zwischen der Sonotrode und dem Amboss 4. Amboss und Sonotrode werden nun zusammengefahren. Dabei werden die Lagen der Folie zwischen beiden Teilen geklemmt. Aufgrund der stärkeren Konturierung des endseitigen Bereiches 13 werden die einzelnen Lagen des vierlagigen Bereiches fester miteinander verwoben als in dem mittleren Bereich. Bei dem nachnachfolgenden Schweißimpuls wird das Kunststoffmaterial der Folie insbesondere durch die parallelen Reihen der Stempelsegmente 15 in die Hohlkehle 17 gedrückt. In der Hohlkehle 17 ist nach dem Ultraschall-Schweißimpuls eine wulstförmige Verdickung als Teil der der Schweißnaht der Folie angeordnet., welche die Folie auch in ihrem vierlagigen Bereich dichtend verschließt. Der Übergang zwischen dem zwei- und dem vierlagigen Bereich der Seitenfaltenschlauchfolie liegt in dem Übergangsbereich, der geringeren Konturierung die Folie auch zweilagigen Bereich verschweißt, ohne diese zu zerstören.

Der so verschlossene Seitenfaltenschlauch kann unmittelbar nach dem Schweißimpuls, also ohne Einhalten einer Kühlzeit als einseitig geschlossenere Sack mit Stückgut befüllt werden.

### Bezugszeichenliste

- 1: Seitenfaltenschlauch
- 2: Ultraschall-Schweißeinrichtung
- 3: Sonotrode
- 4: Amboss
- 4a: Verschließamboss
- 4b: Trennamboss
- 5: Druckfläche
- 6: Nuten
- 7: Ventilsack
- 7a: Ventilstutzen
- 7': Längsseite des Ventilsacks
- 8: Stütz- und Ableitplatte
- 9: Gelenkarme
- 10: Füllstutzen
- 11: Ultraschweißeinrichtung
- 12: mittlerer Bereich
- 13: Endbereich
- 14: Übergangsbereich
- 15: Stempelsegmente
- 16: Ausnehmungen
- 17: Hohlkehle

## Patentansprüche

1. Vorrichtung zum Ausbilden einer aus einem Seitenfaltenschlauch gebildeten Verpackungseinheit oder zum Verschließen einer einen Seitenfaltenschlauch aufweisenden vorkonfektionierten Verpackungseinheit, insbesondere eines Schüttgutsackes, mit einer Schweißeinrichtung (2), die als Ultraschall- Schweißeinrichtung umfassend einen Amboss (4) und eine Sonotrode (3), die aufeinander zu beweglich sind, ausgebildet ist, wobei der Amboss (4) und/oder die Sonotrode (3) eine konturierte Wirkfläche aufweisen,
**dadurch gekennzeichnet,**
- **dass** die Wirkfläche endseitige Bereiche (13), einen mittleren Bereich (12) und einen zwischen dem endseitigen Bereich (13) und dem mittleren Bereich (12) vorgesehenen Übergangsbereich (14) umfasst,
- **dass** der endseitige Bereich (13) mehrere in Längsrichtung der Schweißeinrichtung hintereinander angeordnete Stempelsegmente (15) aufweist,
- **dass** die Kontur in dem mittleren Bereich (12) durch schräg zur Längserstreckung des Amboss (4) ausgerichtete Schweißnuten (6) gebildet ist, und
- **dass** die Endbereiche gegenüber dem mittleren Bereich (12) stärker konturiert sind.

2. Vorrichtung nach Anspruch 1 , **dadurch gekennzeichnet, dass** mehrere sich in Längsrichtung der Schweißeinrichtung erstreckende Reihen von Stempelsegmenten (15) nebeneinander angeordnet sind.

3. Vorrichtung nach einem der vorherigen Ansprüche, **dadurch gekennzeichnet, dass** der endseitige Bereich (13) wenigstens eine sich in Längsrichtung der Schweißeinrichtung erstreckende durchgehende Hohlkehle (17) aufweist.

4. Vorrichtung nach Anspruch 3, **dadurch gekennzeichnet, dass** sich die Hohlkehle (17) bis in den Übergangsbereich (14) erstreckt.

5. Vorrichtung nach Anspruch 3 oder 4, **dadurch gekennzeichnet, dass** die Kontur der Hohlkehle (17) und/oder der Stempelsegmente (15) in dem Übergangsbereich (14) in Richtung auf den mittleren Bereich (12) kontinuierlich abnimmt.

6. Vorrichtung nach einem der vorherigen Ansprüche, **dadurch gekennzeichnet, dass** die Schweißnuten (6) sich diagonal kreuzend vorgesehen sind.

7. Verwendung einer Vorrichtung nach einem der vorherigen Ansprüche, **gekennzeichnet durch** eine Positioniereinrichtung zum Positionieren des zu verschweißenden Schlauchmaterials, die derart ausgestaltet ist, dass die endseitigen Bereiche (13) auf einen vierlagigen und der mittlere Bereich (12) auf den zweilagigen Bereich des zu verschließenden Seitenfaltenschlauches der Verpackungseinheit einwirken.

8. Verwendung nach Anspruch 7, **dadurch gekennzeichnet, dass** die Positioniereinrichtung derart ausgebildet ist, dass das Ende des vierlagigen Bereiches des Seitenfaltenschlauches in dem Übergangsbereich (14) angeordnet ist.

9. Verwendung nach einem der vorherigen Ansprüche, **dadurch gekennzeichnet, dass** der mittlere Bereich (12) 60-70% der Breite des zu verschließenden Seitenfaltenschlauches abdeckt und jeder der endseitigen Bereiche (13) am seitlichen Rand des zu verschließenden Seitenfaltenschlauches 11-15% der Breite des Seitenfaltenschlauches abdeckt.

10. Verwendung nach Anspruch 9, **dadurch gekennzeichnet, dass** jeder der Übergangsbereiche (14) zwischen den endseitigen Bereichen (13) und dem mittleren Bereich (12) 3-5% der Breite des zu verschließenden Seitenfaltenschlauches abdeckt.

## Claims

1. Apparatus for forming a packaging unit formed of a side-fold tube or for sealing a prefabricated packaging unit comprising a side-fold tube, in particular a sack for bulk goods, with a welding device (2) which is designed as an ultrasound device comprising an anvil (4) and a sonotrode (3) which can be moved towards one another, said anvil (4) and/or said sonotrode (3) possessing a contoured welding surface **characterised in that**
- the welding surface comprises end regions (13), a central region (12) and a transitional region (14) provided between the end region (13) and the central region (12),
- the end region (13) possesses several stamp segments (15) arranged in succession in the longitudinal direction of the welding device,
- the contour in the central region (12) is formed by welding grooves (6) aligned diagonally to the longitudinal extension of the anvil (4) and that
- the contours in the end regions are more pronounced than those in the central region (12).

2. Apparatus according to claim 1, **characterised in that** a plurality of rows of stamp segments (15) extending in the longitudinal direction of the welding device are arranged next to one another.

3. Apparatus according to one of the preceding claims, **characterised in that** the end region (13) possesses at least one continuous channel (17) extending in the longitudinal direction of the welding device.

4. Apparatus according to claim 3, **characterised in that** the channel (17) extends into the transitional region (14).

5. Apparatus according to claim 3 or 4, **characterised in that** the contour of the channel (17) and/or of the stamp segments (15) in the transitional region (14) diminishes continuously in the direction of the central region (12).

6. Apparatus according to one of the preceding claims, **characterised in that** the welding grooves (6) intersect diagonally.

7. Use of an apparatus according to one of the preceding claims, **characterised** through a positioning device for positioning the tube material which is to be welded, which is so designed that the end regions (13) act on a four-layered region, and the central region (12) on the two-layered region of the side-fold tube of the packaging unit which is to be sealed.

8. Use according to claim 7, **characterised in that** the positioning device is so designed that the end of the four-layered region of the side-fold tube is arranged in the transitional region (14).

9. Use according to one of the preceding claims, **characterised in that** the central region (12) covers 60-70% of the width of the side-fold tube which is to be sealed and each of the end regions (13) covers 11-15% of the width of the side-fold tube along the lateral edge of the side-fold tube which is to be sealed.

10. Use according to claim 9, **characterised in that** each of the transitional regions (14) covers 3-5% of the width of the side-fold tube which is to be sealed between the end regions (13) and the central region (12).

## Revendications

1. Dispositif pour former une unité d'emballage obtenue à partir d'un tube à soufflets, ou pour fermer une unité d'emballage fabriquée préalablement comportant un tube à soufflets, en particulier un sac pour produit en vrac, comprenant un dispositif de soudage (2) qui est conçu comme un dispositif de soudage à ultrasons comprenant une matrice (4) et une sonotrode (3) aptes à être rapprochées l'une de l'autre, la matrice (4) et/ou la sonotrode (3) présentant une surface active profilée,
**caractérisé en ce que** la surface active comprend des zones d'extrémité (13), une zone centrale (12) et une zone de transition (14) prévue entre la zone d'extrémité (13) et la zone centrale (12),
**en ce que** la zone d'extrémité (13) présente plusieurs segments formant poinçons (15), qui sont disposés les uns derrière les autres dans le sens longitudinal du dispositif de soudage,
**en ce que** le profil de la zone centrale (12) est défini par des rainures de soudage (6) disposées en biais par rapport à l'extension longitudinale de la matrice (4),
et **en ce que** les zones d'extrémité sont plus profilées que la zone centrale (12).

2. Dispositif selon la revendication 1, **caractérisé en ce que** plusieurs rangées de segments formant poinçons (15) prévues dans le sens longitudinal du dispositif de soudage sont disposées côte à côte.

3. Dispositif selon l'une des revendications précédentes, **caractérisé en ce que** la zone d'extrémité (13) présente une gorge continue (17) qui s'étend dans le sens longitudinal du dispositif de soudage.

4. Dispositif selon la revendication 3, **caractérisé en ce que** la gorge (17) s'étend jusque dans la zone de transition (14).

5. Dispositif selon la revendication 3 ou 4, **caractérisé en ce que** dans la zone de transition (14), le profil de la gorge (17) et/ou des segments formant poinçons (15) va en diminuant de manière continue en direction de la zone centrale (12).

6. Dispositif selon l'une des revendications précédentes, **caractérisé en ce que** les rainures de soudage (6) se croisent en diagonale.

7. Utilisation d'un dispositif selon l'une des revendications précédentes, **caractérisée par** un dispositif de positionnement pour le positionnement du matériau tubulaire à souder, qui est conçu de telle sorte que les zones d'extrémité (13) agissent sur une zone à quatre couches, et la zone centrale (12) sur la zone à deux couches du tube à soufflets de l'unité d'emballage qui doit être fermé.

8. Utilisation selon la revendication 7, **caractérisé en ce que** le dispositif de positionnement est conçu pour que l'extrémité de la zone à quatre couches du tube à soufflets soit disposée dans la zone de transition (14).

9. Utilisation selon l'une des revendications précédentes, **caractérisée en ce que** la zone centrale (12) couvre 60-70% de la largeur du tube à soufflets à fermer, et chacune des zones d'extrémité (13) prévues sur les bords latéraux du tube à soufflets à fermer couvre 11-15% de la largeur du tube.

10. Utilisation selon la revendication 9, **caractérisé en ce que** chacune des zones de transition (14) entre les zones d'extrémité (13) et la zone centrale (12) couvre 3-5% de la largeur du tube à soufflets à fermer.
